# EUROPÄISCHE PATENTSCHRIFT

(11) **EP 3 201 606 B1**
(45) Veröffentlichungstag und Bekanntmachung des Hinweises auf die Patenterteilung: **30.11.2022**
(21) Anmeldenummer: 15775165.2
(22) Anmeldetag: 01.10.2015
(51) Int. Cl.: G01N 21/41, G01V 1/18, G01N 21/552, G01N 21/77

(54) **VORRICHTUNG UND VERFAHREN ZUR BESTIMMUNG EINER BRECHZAHL**
DEVICE AND METHOD FOR DETERMINING A REFRACTIVE INDEX
DISPOSITIF ET PROCÉDÉ DE DÉTERMINATION D'UN INDICE DE RÉFRACTION

(30) Priorität: 02.10.2014 DE 102014220040
(43) Veröffentlichungstag der Anmeldung: 09.08.2017
(73) Patentinhaber: Fraunhofer-Gesellschaft zur Förderung der angewandten Forschung e.V., 80686 München (DE); Boston University, Boston, MA 02215 (US)
(72) Erfinder: SCHADE, Wolfgang, 38644 Goslar (DE); BURGMEIER, Jörg, 37520 Osterode (DE); BAUMANN, Anna Lena, 38640 Goslar (DE); REINHARD, Björn, Brookline, Massachusetts 02446 (US)
(74) Vertreter: Friese Goeden Patentanwälte PartGmbB
(86) Internationale Anmeldenummer: PCT/EP2015/072653
(87) Internationale Veröffentlichungsnummer: WO 2016/050895

(56) Entgegenhaltungen:
- EP-A1- 1 195 582
- WO-A1-2014/118519
- GB-A- 2 447 966
- US-A1- 2010 259 752
- CHAU L K ET AL: "Fiber-optic chemical and biochemical probes based on localized surface plasmon resonance", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER S.A, CH, Bd. 113, Nr. 1, 17. Januar 2006 (2006-01-17), Seiten 100-105, XP027971068, ISSN: 0925-4005 [gefunden am 2006-01-17]
- JÖRG BURGMEIER ET AL: "Plasmonic nanoshell functionalized etched fiber Bragg gratings for highly sensitive refractive index measurements", OPTICS LETTERS, OPTICAL SOCIETY OF AMERICA, US, Bd. 40, Nr. 4, 15. Februar 2015 (2015-02-15), Seiten 546-549, XP001593961, ISSN: 0146-9592, DOI: 10.1364/OL.40.000546 [gefunden am 2015-02-09]

## Beschreibung

Die Erfindung betrifft eine Vorrichtung zur Bestimmung einer Brechzahl, welche zumindest einen Wellenleiter mit einem Kern und einen den Kern umgebenden Mantel enthält, wobei der Mantel in zumindest einem ersten Längsabschnitt zumindest teilweise entfernt ist und der Kern in zumindest einem zweiten Längsabschnitt zumindest ein Faser-Bragg-Gitter enthält. Weiterhin betrifft die Erfindung ein Verfahren zur Bestimmung einer Brechzahl oder einer Druckänderung in einem Fluid, bei welchen zumindest ein Wellenleiter mit einem Kern und einem den Kern umgebenden Mantel verwendet wird, wobei der Mantel in zumindest einem Längsabschnitt zumindest teilweise entfernt ist. Schließlich betrifft die Erfindung ein Verfahren zur Herstellung einer solchen Vorrichtung. Aus W. Liang, Y. Huang, Y. Xu, R.K. Lee und A. Yariv: "Highly Sensitive Fiber Bragg Grating Refractive Index Sensors", Appl. Phys. Lett. 86, 151122 (2005) ist ein faseroptischer Sensor bekannt, welcher ein Bragg-Gitter enthält. Der faseroptische Sensor enthält einen Lichtwellenleiter mit einem Kern und einem Mantel, wobei der Mantel im Bereich des Bragg-Gitters entfernt ist. Der Sensor kann in Gase oder Flüssigkeiten eingetaucht werden, wobei sich die vom Bragg-Gitter reflektierte Bragg-Wellenlänge in Abhängigkeit des Brechungsindex bzw. der Brechzahl des den Sensor umgebenden Mediums ändert.

Nachteilig an diesem Sensor ist jedoch dessen geringe Auflösung. Die Bragg-Wellenlänge ändert sich bei Änderung der Brechzahl lediglich um Bruchteile eines Nanometers, so dass sehr aufwändige Lichtquellen und Spektrometer erforderlich sind, um die Wellenlängenverschiebung und daraus die Brechzahl des Mediums zu bestimmen.

Aus der GB 2 447 966 A ist ein optischer chemischer Sensor bekannt. Dieser umfasst: eine optische Faser mit einem Kern und einer Mantelschicht und einer Aussparung in der Mantelschicht, welche mit einem Reagenz beschichtet ist, so dass ein Teil des Reagenz mit dem abklingenden Lichtfeld interagiert, das entlang der optischen Faser verläuft. Das Reagenz kann ein Nanopartikel aus Titanoxid, Palladium, Platin oder Rhodium sein, das in eine Polymermatrix eingebettet ist. Dieses Dokument offenbart den Oberbegriff des Anspruchs 1.

Die US 2010/0259752 A1 offenbart ein System und ein Verfahren zum Erfassen einer externen Messgröße. Ein Sensor umfasst eine optische Faser mit mindestens einem Faser-Bragg-Gitterabschnitt (FBG-Abschnitt) und mehreren Kohlenstoffnanoröhren (CNTs), die mindestens einen Teil des FBG-Abschnitts umgeben. Der Sensor wird mit Licht versorgt, während die CNTs einer oder mehreren Messgrößen ausgesetzt sind. Eine Änderung in einem Spektrum von einem durchgelassenen Teil und einem reflektierten Teil des Lichts wird bestimmt.

Aus L.-K. Chau et al.: "Fibre-optic chemical and biochemical probes based on localized surface plasmon resonance." Sensors and Actuators B 113 (2006) 100-105 ist bekannt, eine optische Faser als Sensor zu verwenden, indem diese mit Nanopartikeln versehen wird.

EP 1 195 582 A1 zeigt, Licht von einer Lichtquelle in einen Resonator einzuspeisen, der eine Resonatorfaser und hochreflektierende Koppler umfasst. Aus der Resonatorfaser herausgekoppeltes Licht wird von einem Lichtsensor erfasst. Der Resonator ist so aufgebaut, dass seine Verluste von einem zu messenden physikalischen Parameter abhängen.

WO 2014/118519 A1 beschreibt einen Oberflächenplasmongenerator, bei dem nanoskalige Strukturen an einer Grenzfläche zur Unterstützung von Oberflächenplasmonen verwendet werden, um die Empfindlichkeit der Vorrichtung gegenüber bestimmten Materialien zu verbessern. Der Oberflächenplasmongenerator umfasst einen optischen Wellenleiter mit einer Oberflächenplasmonenträgerschicht, die auf einer Außenfläche davon ausgebildet ist.

Ausgehend vom Stand der Technik liegt der Erfindung somit die Aufgabe zugrunde, ein Verfahren und eine Vorrichtung zur Bestimmung einer Brechzahl anzugeben, welche mit geringerem Aufwand betrieben werden kann und genauere Ergebnisse liefert.

Die Aufgabe wird erfindungsgemäß durch eine Vorrichtung gemäß Anspruch 1, ein Verfahren gemäß Anspruch 9 und ein Verfahren gemäß Anspruch 13 gelöst. Vorteilhafte Weiterbildungen der Erfindung finden sich in den Unteransprüchen.

Erfindungsgemäß wird vorgeschlagen, zur Bestimmung einer Brechzahl eines Fluides einen Wellenleiter mit einem Kern und einem den Kern umgebenden Mantel zu verwenden. Der Wellenleiter kann in einigen Ausführungsformen der Erfindung aus Glas oder Kunststoff bestehen. In einigen Ausführungsformen der Erfindung kann eine an sich bekannte Glasfaser aus der Telekommunikation bzw. der optischen Nachrichtentechnik Verwendung finden. Zwischen Kern und Mantel kann eine geometrisch bestimmte Grenzfläche ausgebildet sein, welche das Material des Kerns vom Material des Mantels abgrenzt. Der Brechungsindex zwischen Kern und Mantel ist so gewählt, dass im Kern propagierendes Licht an der Grenzfläche zwischen Kern und Mantel totalreflektiert werden kann, so dass das Licht im Kern geführt wird.

Das Fluid kann ausgewählt sein aus einem Gas und/oder einer Flüssigkeit.

Die erfindungsgemäße Vorrichtung weist zumindest einen ersten Längsabschnitt auf, in welchem der Mantel zumindest teilweise entfernt ist. Die teilweise Entfernung des Mantels kann so erfolgen, dass der Mantel in einzelnen Unterabschnitten des ersten Längsabschnittes entfernt ist und in anderen Unterabschnitten nicht entfernt ist. In anderen Ausführungsformen der Erfindung kann der Mantel im ersten Längsabschnitt dünner sein als auf der verbleibenden Länge des Wellenleiters, ohne dass der Mantel im ersten Längsabschnitt völlständig entfernt ist. In einigen Ausführungsformen der Erfindung können mehrere erste Längsabschnitte vorhanden sein, so dass eine Brechzahl oder eine Druckschwankung, beispielsweise ein Schaltsignal, an unterschiedlichen Orten entlang des Wellenleiters gemessen werden kann. Der erfindungsgemäße Wellenleiter enthält zumindest ein Faser-Bragg-Gitter. Das Bragg-Gitter enthält eine Mehrzahl von Raumbereichen, welche einen anderen Brechungsindex aufweisen wie das angrenzende Material des Kerns. Die modifizierten Raumbereiche können einen konstanten Abstand zueinander aufweisen, welche die Gitterkonstante des Faser-Bragg-Gitters definiert. In anderen Ausführungsformen der Erfindung kann der Abstand variabel sein, so dass ein gechirptes Faser-Bragg-Gitter entsteht. Das Faser-Bragg-Gitter, oder kurz Bragg-Gitter, hat die Wirkung, dass ein durch die Gitterkonstante definierter Teil des elektromagnetischen Spektrums reflektiert wird, wohingegen Licht anderer Wellenlängen das Bragg-Gitter passieren kann. Die reflektierte Wellenlänge bzw. der reflektierte Wellenlängenbereich wird als Bragg-Wellenlänge bezeichnet. Bragg-Gitter werden bei der Erfindung durch Punkt-zu-Punkt-Belichten des Kerns mit Laserstrahlung, insbesondere Strahlung eines Kurzpulslasers, erhalten Erfindungsgemäß wird nun vorgeschlagen, zumindest eine Teilfläche der Oberfläche im ersten Längsabschnitt mit Nanopartikeln zu versehen. Dieses Merkmal hat die Wirkung, dass Intensitätsverluste der am Bragg-Gitter reflektierten Welle auftreten. Diese Verluste sind von der Brechzahl des den ersten Längsabschnitt umgebenden Mediums abhängig. Für diese brechzahlabhängigen Intensitätsverluste sind zwei Effekte verantwortlich. Zum einen ist der evaneszente Anteil des geführten Lichtes brechzahlabhängig, so dass in Abhängigkeit des umgebenden Mediums mehr oder weniger Licht mit den Nanopartikeln wechselwirken kann. Weiterhin sind die Streu- und Absorptionseigenschaften der Nanopartikel selbst von der Brechzahl des umgebenden Mediums abhängig. Das erfindungsgemäße Faser-Bragg-Gitter verstärkt die Intensitätsverluste und ermöglicht dadurch die Messung in Reflektion, so dass der apparative Aufwand für den Betrieb der Vorrichtung reduziert ist.

Erfindungsgemäß wird vorgeschlagen, zur Bestimmung der Brechzahl eines die Vorrichtung umgebenden Mediums nicht oder nicht ausschließlich die Verschiebung der Bragg-Wellenlänge zu bestimmen, sondern die Intensität reflektierten Lichtes. Es wurde erkannt, dass die brechzahlabhängigen Verluste ein wesentlich deutlicheres Messsignal ermöglichen als die vergleichsweise geringe Verschiebung der Bragg-Wellenlänge. Hierdurch kann die Messung mit erhöhter Genauigkeit durchgeführt werden und eine Intensitätsmessung ist im Gegensatz zur Bestimmung der Wellenlänge mit vergleichweise geringem Aufwand möglich, beispielsweise einer einzelnen Photodiode, deren Ausgangsspannung proportional zur einfallenden Lichtintensität ist.

Gemäß der Erfindung bildet der zweite Längsabschnitt zumindest einen Teil des ersten Längsabschnittes. Dies bedeutet, dass auch das Bragg-Gitter in einem Abschnitt des Wellenleiters angeordnet ist, in welchem der Mantel zumindest teilweise entfernt ist. Hierdurch kann der Intensitätsverlust des im Kern geführten optischen Signals vergrößert werden, so dass das Signal-/Rauschverhältnis der Messung verbessert ist.

Gemäß der Erfindung sind benachbart zum Faser-Bragg-Gitter periodische Löcher im Mantel vorhanden. Es hat sich gezeigt, dass nach der Herstellung des Bragg-Gitters durch Belichten des Kerns mit Laserstrahlung auch ein Teil des Mantels, welcher im Strahlengang liegt, durch die Laserstrahlung so modifiziert wird, dass dieser durch nass- oder trockenchemisches Ätzen bevorzugt entfernt wird. Somit kann der Teil des Mantels selektiv entfernt werden, welcher unmittelbar an das Bragg-Gitter angrenzt. Da der Mantel in den verbleibenden Bereichen vollständig oder zumindest nahezu vollständig vorhanden bleibt, behält der Wellenleiter seine ursprünglichen Eigenschaften weitgehend bei, wobei gleichzeitig ein sehr großer Wechselwirkungsquerschnitt für Streuung und Absorption zwischen dem im Wellenleiter geführten Licht und den Nanopartikeln erfolgen kann. Zudem können die Nanopartikel als Cluster in den periodischen Löchern abgeschieden werden, so dass durch die Größe der Cluster die Plasmonenresonanz der Nanopartikel einstellbar ist.

In einigen Ausführungsformen der Erfindung kann der Wellenleiter als Single-Mode-Faser ausgebildet sein. Dies bedeutet, dass lediglich eine einzige Mode im Kern geführt wird. Hierdurch bleibt auch bei Formänderung des Wellenleiters die Modenverteilung konstant, so dass das Messsignal mit höherer Stabilität zur Verfügung steht und die Messgenauigkeit dadurch erhöht ist.

In einigen Ausführungsformen der Erfindung können die Nanopartikel ein Metall oder eine Legierung enthalten oder daraus bestehen und eine Plasmonenfrequenz aufweisen, welche in etwa einer Resonanzfrequenz des Bragg-Gitters entspricht. Die Plasmonenfrequenz kann dabei durch die Zusammensetzung der Nanopartikel, die Größe der Nanopartikel und die Größe der auf der Oberfläche des Wellenleiters haftenden Cluster eingestellt sein. Durch die Abstimmung der Plasmonenfrequenz auf die Bragg-Wellenlänge können die Verluste vergrößert werden, so dass sich die Messgenauigkeit erhöht.

In einigen Ausführungsformen der Erfindung können die Nanopartikel Palladium enthalten oder daraus bestehen. In einigen Ausführungsformen der Erfindung können die Nanopartikel aktiviert werden, beispielsweise durch eine Plasmabehandlung oder eine auf den Nanopartikeln abgeschiedene Beschichtung. Hierdurch können sich vorgebbare Moleküle auf den Nanopartikeln anlagern und hierdurch die Plasmonenfrequenz verändern. Damit erlaubt die erfindungsgemäße Vorrichtung nicht nur die Bestimmung der Brechzahl des umgebenden Mediums, sondern auch die Messung der Konzentration eines oder mehrerer Targetmoleküle.

In einigen Ausführungsformen der Erfindung kann zumindest eine Teilfläche der mit Nanopartikeln versehenen Oberfläche im ersten Längsabschnitt zusätzlich Antikörper tragen. Dies erlaubt das Ankoppeln vorgebbarer Antigene, Viren oder anderen biologischen Materials, so dass die Konzentration vorgebbarer Antigene oder Viren anhand der Lichtintensität und/oder der Bragg-Wellenlänge bestimmbar sind.

In einigen Ausführungsformen der Erfindung kann das Messsignal mit zumindest einer Laserlichtquelle oder einer anderen schmalbandigen Lichtquelle erzeugt werden, deren Emissionswellenlänge in etwa der Bragg-Wellenlänge des Faser-Bragg-Gitters entspricht. Zum Empfang des Lichtes steht zumindest eine Photodiode zur Verfügung, welche dazu eingerichtet ist, vom Bragg-Gitter reflektiertes Licht zu empfangen. Da in diesem Fall kein Spektrometer benötigt wird, um das Messsignal zu erzeugen, und Halbleiterlichtquellen als kompaktes Bauelement zur Verfügung stehen, kann die Messvorrichtung besonders einfach gehalten sein und dennoch zuverlässige Ergebnisse liefern.

In einigen Ausführungsformen der Erfindung kann der erste Längsabschnitt eine Länge von etwa 0,1 mm bis etwa 5 mm aufweisen. In einigen Ausführungsformen der Erfindung kann der erste Längsabschnitt eine Länge von etwa 0,5 mm bis etwa 2 mm aufweisen. Durch solchermaßen miniaturisierte Sensoren kann die Brechzahl auch ortsaufgelöst bestimmt werden.

In einigen Ausführungsformen der Erfindung kann zusätzlich eine Einrichtung zur Bestimmung der Wellenlänge des vom Faser-Bragg-Gitter reflektierten Lichtes vorhanden sein. Hierdurch können unterschiedliche Messorte durch Wellenlängenmultiplex diskriminiert werden oder durch zusätzliche Bestimmung der Wellenlängenverschiebung und der Intensität kann die Messung des Brechungsindexes plausibilisiert und/oder mit größerer Genauigkeit durchgeführt werden.

In einigen Ausführungsformen der Erfindung kann zusätzlich eine Einrichtung zur Bestimmung der Wellenlänge ein Farbfilter sein oder ein solches enthalten, beispielsweise ein Bandpass-, ein Hochpass- oder ein Tiefpassfilter. In anderen Ausführungsformen kann eine Einrichtung zur Bestimmung der Wellenlänge ein Spektrometer umfassen, um die Wellenlänge mit größerer Genauigkeit zu bestimmen.

Nachfolgend soll die Erfindung anhand von Figuren ohne Beschränkung des allgemeinen Erfindungsgedankens näher erläutert werden. Dabei zeigt
Fig. 1 eine erste Ausführungsform eines bekannten Sensors.
Fig. 2 zeigt eine zweite Ausführungsform eines bekannten Sensors.
Fig. 3 zeigt eine schematische Darstellung einer Ausführungsform der erfindungsgemäßen Vorrichtung.
Fig. 4 zeigt eine elektronenmikroskopische Aufnahme der Vorrichtung gemäß Fig. 3.
Fig. 5 zeigt die Änderung der Bragg-Wellenlänge in Abhängigkeit der Brechzahl.
Fig. 6 zeigt die Intensität in Abhängigkeit der Brechzahl.
Fig. 7 zeigt den Einfluss der Nanopartikel auf die optischen Verluste.
Fig. 8 zeigt den Einsatz der erfindungsgemäßen Vorrichtung als Hydrophon.

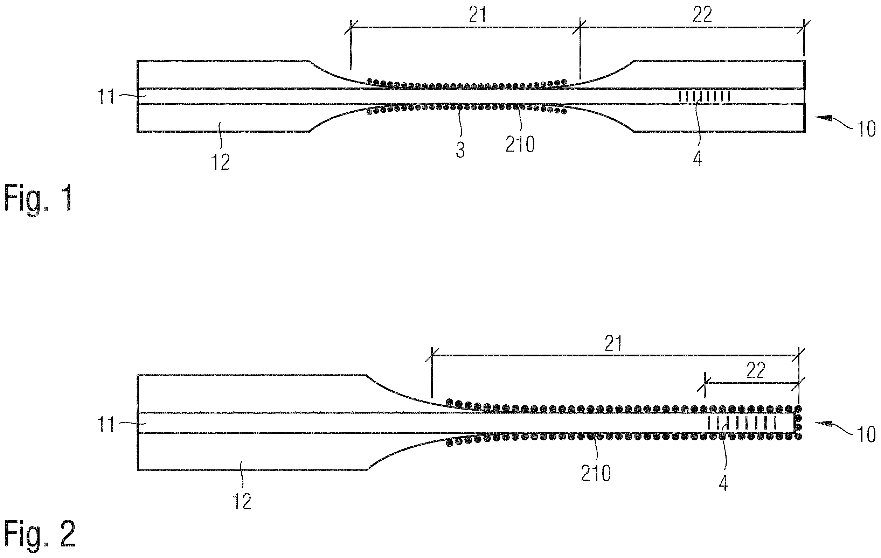

Anhand von Fig. 1 wird eine erste eines Sensors erläutert. Die Vorrichtung enthält zumindest einen Wellenleiter 10. Der Wellenleiter 10 weist zumindest einen Kern 11 und einen den Kern umgebenden Mantel 12 auf. Der Mantel 12 ist in zumindest einem ersten Längsabschnitt 21 zumindest teilweise entfernt. Die zumindest teilweise Entfernung kann wie in Fig. 1 dargestellt dadurch erfolgen, dass der Durchmesser des Wellenleiters 10 verringert ist, so dass der Mantel 12 eine geringere Dicke aufweist. In einigen Ausführungsformen der Erfindung kann der Mantel bis zur Grenzfläche zwischen Kern und Mantel entfernt werden, so dass die Oberfläche 210 im ersten Längsabschnitt 21 durch die Oberfläche des Kerns 11 gegeben ist.

Die Oberfläche 210 im ersten Längsabschnitt 21 ist zumindest teilweise mit Nanopartikeln 3 versehen. Die Nanopartikel 3 können beispielsweise aus einer wässrigen Lösung abgeschieden werden, so dass diese an der Oberfläche 210 haften. In anderen Ausführungsformen der Erfindung können die Nanopartikel durch einen Plasmastrahl auf die Oberfläche 210 aufgebracht werden. Der Plasmastrahl kann darüber hinaus eine Oberflächenmodifikation bzw. eine Aktivierung der Nanopartikel bewirken, so dass sich vorgebbare Targetmoleküle an die Nanopartikel anlagern können und/oder die Plasmonenfrequenz der Nanopartikel einen vorgebbaren Wert aufweist.

Weiterhin weist die Vorrichtung zumindest einen zweiten Längsabschnitt 22 auf, in welchem sich ein Bragg-Gitter 4 befindet. Das Bragg-Gitter 4 bewirkt, dass eine durch die Gitterkonstante vorgebbare Wellenlänge oder ein Wellenlängenbereich reflektiert wird, so dass Licht auf einer Seite des Wellenleiters 10 sowohl ein- als auch ausgekoppelt werden kann. Das reflektierte Licht durchläuft somit den ersten Längsabschnitt 21 zweimal und kann evaneszent an die Nanopartikel 3 koppeln. Die Intensitätsverluste im ersten Längsabschnitt 21 hängen vom Brechungsindex bzw. der Brechzahl des den Wellenleiter 10 umgebenden Mediums ab, so dass die aus dem Wellenleiter 10 ausgekoppelte Intensität geringer ist als die eingekoppelte Intensität. Die nachgewiesene Intensität ist somit ein Maß für die Brechzahl.

Die in Fig. 1 dargestellten ersten Längsabschnitte 21 und zweiten Längsabschnitte 22 können mehrfach entlang der Länge des Wellenleiters 10 vorhanden sein, so dass die Brechzahl an mehreren Orten gleichzeitig gemessen werden kann, wobei der Messort anhand der Bragg-Wellenlänge des jeweiligen Bragg-Gitters 4 bestimmt werden kann.

Anhand von Fig. 2 wird eine zweite Ausführungsform eines Sensors erläutert. Gleiche Bestandteile der Erfindung sind mit gleichen Bezugszeichen versehen, so dass sich die Beschreibung auf die wesentlichen Unterschiede beschränkt.

Wie aus Fig. 2 ersichtlich ist, besteht der zweite Längsabschnitt 22, welcher zumindest ein Bragg-Gitter 4 enthält, aus einem Teil des ersten Längsabschnitts 21, in welchem der Mantel 12 zumindest teilweise entfernt ist und dessen Oberfläche 210 mit Nanopartikeln 3 versehen ist. Dieses Merkmal hat die Wirkung, dass das Bragg-Gitter nicht nur die Messung in Reflektion erlaubt, sondern ebenfalls die Intensitätsverluste an der Oberfläche 210 verstärkt. Aufgrund des Bragg-Gitters 4 kann ein größerer Teil des im Kern 11 geführten Lichts mit den Nanopartikeln 3 wechselwirken, so dass eine genauere Bestimmung der Brechzahl ermöglicht wird. Alternativ oder zusätzlich kann die Bragg-Wellenlänge bestimmt werden, welche sich ebenfalls in Abhängigkeit des Brechungsindex bzw. der Brechzahl des den Wellenleiter 10 umgebenden Mediums ändert. Hierdurch können die aus der Messung der Intensität erhaltenen Werte plausibilisiert werden.

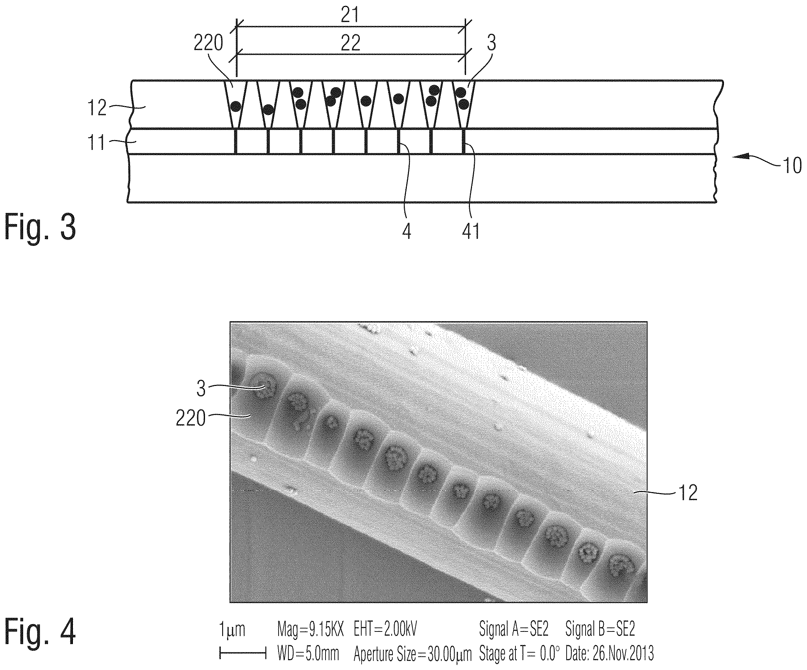

Fig. 3 und Fig. 4 erläutern eine Ausführungsform der erfindungsgemäßen Vorrichtung. Dabei zeigt Fig. 3 einen Schnitt durch den Wellenleiter 10 und Fig. 4 eine elektronenmikroskopische Aufnahme des Außenseite des Wellenleiters.

In der Ausführungsform der Erfindung wird das Bragg-Gitter 4 in an sich bekannter Weise durch Punkt-zu-Punkt-Belichtung mit einem Kurzpulslaser im Kern 11 des Wellenleiters 10 erzeugt. Die Laserstrahlung modifiziert das Material des Kerns 11 im Intensitätsmaximum derart, dass Raumbereiche 41 entstehen, welche einen anderen Brechungsindex aufweisen wie benachbarte Bereiche des Kernes 11. Im dargestellten Ausführungsbeispiel sind beispielhaft 8 Raumbereiche 41 dargestellt, welche äquidistant in den Kern 11 eingebracht sind. In anderen Ausführungsformen der Erfindung kann die Anzahl größer oder auch geringer sein.

Im Ausführungsbeispiel der Fig. 3 wurde die Laserstrahlung zur Erzeugung der Raumbereiche 41 von oben in den Wellenleiter 10 eingestrahlt. Hierdurch wird auch das Material des Mantels 12 im Strahlengang so modifiziert, dass dieses beim nass- oder trockenchemischen Ätzen, beispielsweise mit einer wässrigen Lösung von Fluorwasserstoff, eine höhere Ätzrate aufweist als das nicht belichtete Material des Mantels 12. Hierdurch entstehen periodische Löcher 220 im Material des Mantels 12, welche trichterförmig ausgeformt sein können.

Der erste Längsabschnitt 21, in welchem das Material des Mantels 12 entfernt ist, fällt somit mit der Längserstreckung des Bragg-Gitters 4 und damit mit der Ausdehnung des zweiten Längsabschnittes 22 zusammen. Weiter ist darauf hinzuweisen, dass das Material des Mantels 12 aufgrund des selektiven Ätzens der belichteten Raumbereiche im ersten Längsabschnitt 21 nicht vollständig entfernt ist, sondern lediglich periodische Löcher 220 im Mantel vorhanden sind.

Weiterhin zeigen Fig. 3 und Fig. 4 Cluster von Nanopartikeln 3, welche sich bevorzugt in den Löchern 220 anordnen. Die Löcher 220 erlauben eine Kontrolle der Größe der Cluster, so dass die Wellenlänge der Plasmonenresonanz bei der Herstellung der Vorrichtung eingestellt werden kann. Je mehr Nanopartikel 3 in einem Cluster in einem Loch 220 vorhanden sind, umso größer wird die Wellenlänge der Plasmonenresonanz.

In allen beschriebenen Ausführungsformen der Erfindung können die Nanopartikel 3 weiter funktionalisiert werden, beispielsweise durch das Anlagern von Antikörpern, so dass die Anwesenheit von Antigenen anhand der im Wellenleiter auftretenden optischen Verluste nachgewiesen und/oder quantifiziert werden kann.

In einigen Ausführungsformen der Erfindung können neben dem dargestellten Bragg-Gitter 4 weitere Bragg-Gitter im Kern 11 vorhanden sein, mit welchen die Temperatur, die mechanische Spannung oder die Form des Wellenleiters 10 bestimmt werden können.

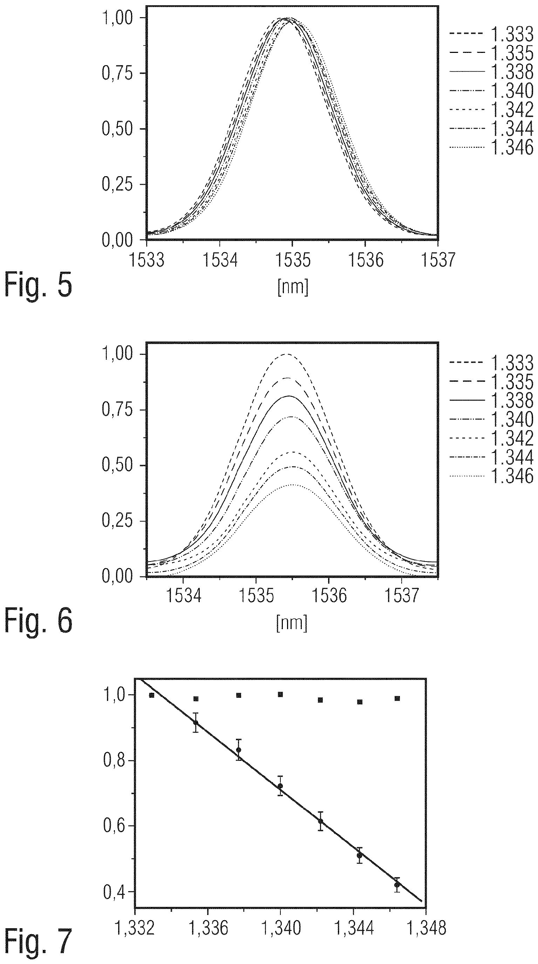

Anhand der Fig. 5, 6 und 7 wird die Bestimmung der Brechzahl eines Fluides, d.h. eines gasförmigen oder flüssigen Mediums erläutert, welches einen Sensor gemäß einer der Fig. 1 bis 4 umgibt.

Wie bereits bekannt war, ändert sich die Bragg-Wellenlänge in Abhängigkeit des Brechungsindex des den Wellenleiter 10 umgebenden Mediums, wie in Fig. 5 als Vergleichsbeispiel dargestellt ist. Fig. 5 zeigt die normierte Intensität des vom Bragg-Gitter reflektierten Lichts auf der Ordinate und dessen Wellenlänge auf der Abszisse. Dargestellt sind Messwerte für sieben verschiedene Medien mit sieben unterschiedlichen Brechungsindizes. Die Messwerte wurden mit einem bekannten faseroptischen Sensor aufgenommen, dessen Oberfläche keine Nanopartikel enthält.

Fig. 5 zeigt, dass sich das Maximum des reflektierten Lichtes bzw. die Bragg-Wellenlänge bei höherer Brechzahl zu größeren Wellenlängen verschiebt. Die Intensitätsänderung ist in Fig. 7 auf der Ordinate gegen den Brechungsindex auf der Abszisse aufgetragen (quadratische Messpunkte). Die Intensität bleibt bei dem bekannten faseroptischen Sensor nahezu konstant.

Fig. 6 zeigt die normierte Intensität reflektierten Lichts auf der Ordinate gegen die Wellenlänge auf der Abszisse für ebenfalls sieben unterschiedliche Medien mit sieben unterschiedlichen Brechzahlen. Die Messwerte gemäß Fig. 6 wurden mit einer erfindungsgemäßen Vorrichtung erhalten, welche im ersten Längsabschnitt 21 Nanopartikel 3 enthält. Deutlich erkennbar ist eine Abnahme der Intensität des reflektierten Lichts bzw. ein Ansteigen der Intensitätsverluste im Wellenleiter 10 mit zunehmendem Brechungsindex. Die normierte Intensität ist in Fig. 7 ebenfalls auf der Ordinate gegen die Brechzahl auf der Abszisse aufgetragen (runde Datenpunkte). Ebenfalls ist eine lineare Regression dieser Messwerte eingezeichnet.

Fig. 7 zeigt deutlich die Überlegenheit der erfindungsgemäßen Vorrichtung, deren Messsignal im selben Messbereich des Brechungsindex um 60 % variiert, wohingegen die bekannte Vorrichtung ohne Nanopartikel lediglich eine Änderung der Messgröße um wenige Prozent erkennen lässt. Der bekannte Sensor muss daher mit wesentlich höherem Aufwand ausgelesen werden und liefert dennoch größere Messfehler für die Brechzahl als die erfindungsgemäße Lösung.

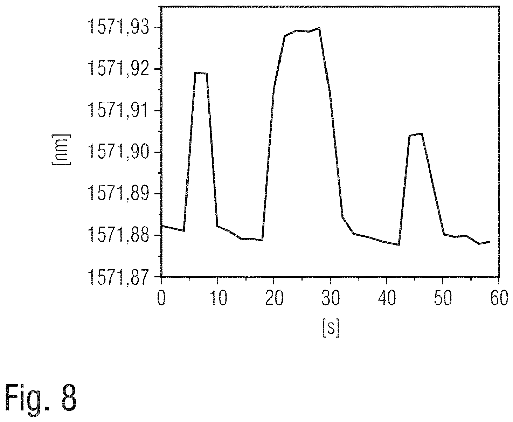

Erfindungsgemäß wurde weiter erkannt, dass sich die Bragg-Wellenlänge ändert, wenn die erfindungsgemäße Vorrichtung in ein flüssiges Medium eintaucht und sich Druckschwankungen, beispielsweise Schallsignale, in diesem Medium ausbreiten. Fig. 8 zeigt die Bragg-Wellenlänge auf der Ordinate und die Zeit auf der Abszisse. Während der dargestellten Messzeit von 60 Sekunden wurde während dreier Perioden ein Ultraschallsignal in das wässrige Medium mit der erfindungsgemäßen Vorrichtung eingekoppelt, nämlich zwischen etwa 5 Sekunden und etwa 10 Sekunden, zwischen etwa 19 Sekunden und etwa 31 Sekunden und zwischen etwa 44 Sekunden und etwa 50 Sekunden. Deutlich ist erkennbar, dass sich die Bragg-Wellenlänge zu längeren Wellenlängen verschiebt, wenn sich Ultraschallsignale im wässrigen Medium ausbreiten. Damit ist die erfindungsgemäße Vorrichtung als Hydrophon einsetzbar, um Schallsignale in wässrigen Medien zu erfassen, beispielsweise in Meerwasser.

Alternativ kann in einer anderen Ausführungsform der Erfindung die Messung von Druckschwankungen, beispielsweise Schallsignalen, durch die Messung der Intensität optischer Signale erfolgen, wie vorstehend beschrieben. Erfindungsgemäß wurde erkannt, dass die Druckschwankung im Medium zu einer periodischen, lokalen Änderung des Brechungsindex führt, welche wie vorstehend beschrieben mit dem erfindungsgemäßen Sensor erfasst werden kann.

In einigen Ausführungsformen der Erfindung kann sowohl die Intensität als auch die Bragg-Wellenlänge erfasst werden. Somit wird das Schallsignal doppelt erfasst, so dass eine Plausibilisierung der Messwerte erfolgen kann. Hierdurch kann die Messung mit größerer Zuverlässigkeit erfolgen.

## Patentansprüche

1. Vorrichtung zur Bestimmung einer Brechzahl oder Hydrophon, welche zumindest einen Wellenleiter (10) mit einem Kern (11) und einem den Kern (11) umgebenden Mantel (12) enthält, wobei der Mantel (12) in zumindest einem ersten Längsabschnitt (21) teilweise entfernt ist und der Kern in zumindest einem zweiten Längsabschnitt (22) zumindest ein Faser-Bragg-Gitter (4) enthält, wobei zumindest eine Teilfläche der Oberfläche (210) im ersten Längsabschnitt (21) mit Nanopartikeln (3) versehen ist, und
die Vorrichtung weiterhin eine Einrichtung zur Erfassung der Intensität des vom Faser-Bragg-Gitter (4) reflektierten Lichtes enthält,
**dadurch gekennzeichnet, dass**
das Faser-Bragg-Gitter (4) durch Punkt-zu-Punkt-Belichten des Kerns (11) mit Laserstrahlung erzeugt wurde,
wobei ein Teil des Mantels (12), welcher im Strahlengang liegt, durch : selektives nass- oder trockenchemisches Ätzen vom durch die Laserstrahlung belichteten Material entfernt wurde, sodass angrenzend an das Faser-Bragg-Gitter (4) periodische Löcher (220) im Mantel (12) vorhanden sind, wobei der Mantel (12) in den verbleibenden Bereichen des ersten Längsabschnitts (21) vorhanden bleibt, und dass
die Löcher (220) Cluster von Nanopartikeln (3) enthalten.

2. Vorrichtung oder Hydrophon nach Anspruch 1, **dadurch gekennzeichnet, dass** der Wellenleiter (10) als Singlemodefaser ausgebildet ist.

3. Vorrichtung oder Hydrophon nach einem der Ansprüche 1 oder 2, **dadurch gekennzeichnet, dass** die Nanopartikel (3) ein Metall oder eine Legierung enthalten und eine Plasmonenfrequenz aufweisen, welche in etwa einer Resonanzfrequenz des Faser-Bragg-Gitters (4) entspricht.

4. Vorrichtung oder Hydrophon nach einem der Ansprüche 1 bis 3, **dadurch gekennzeichnet, dass** die Nanopartikel Palladium enthalten oder daraus bestehen.

5. Vorrichtung oder Hydrophon nach einem der Ansprüche 1 bis 4, **dadurch gekennzeichnet, dass** zumindest eine Teilfläche der mit Nanopartikeln (3) versehenen Oberfläche im ersten Längsabschnitt zusätzlich Antikörper trägt.

6. Vorrichtung oder Hydrophon nach einem der Ansprüche 1 bis 5, weiterhin enthaltend zumindest eine Laserlichtquelle, deren Emissionswellenlänge in etwa der Braggwellenlänge des Faser-Bragg-Gitters (4) entspricht und zumindest eine Photodiode, welche dazu eingerichtet ist, vom Faser-Bragg-Gitter (4) reflektiertes Licht zu empfangen.

7. Vorrichtung oder Hydrophon nach einem der Ansprüche 1 bis 6, **dadurch gekennzeichnet, dass** der erste Längsabschnitt (21) eine Länge von etwa 0,1 mm bis etwa 5,0 mm aufweist oder dass der erste Längsabschnitt (21) eine Länge von etwa 0,5 mm bis etwa 2,0 mm aufweist.

8. Vorrichtung oder Hydrophon nach einem der Ansprüche 1 bis 7, weiterhin enthaltend eine Einrichtung zur Erfassung der Wellenlänge des vom Faser-Bragg-Gitter (4) reflektierten Lichtes.

9. Verfahren zur Bestimmung einer Brechzahl oder einer Druckänderung eines Fluides, bei welchem zumindest ein Wellenleiter (10) mit einem Kern (11) und einem den Kern (11) umgebenden Mantel (12) verwendet wird, wobei der Mantel (12) in zumindest einem ersten Längsabschnitt (21) zumindest teilweise entfernt ist und der Kern in zumindest einem zweiten Längsabschnitt (22) zumindest ein Faser-Bragg-Gitter (4) enthält, wobei Licht in den Kern des Wellenleiters (11) eingekoppelt wird und die Brechzahl und/oder die Druckänderung aus der Intensität reflektierten Lichtes bestimmt wird,
**dadurch gekennzeichnet,**
**dass** das Faser-Bragg-Gitter (4) durch Punkt-zu-Punkt-Belichten des Kerns (11) mit Laserstrahlung erzeugt wurde, wobei ein Teil des Mantels (12), welcher im Strahlengang liegt, durch : selektives
nass- oder trockenchemisches Ätzen vom durch die Laserstrahlung belichteten Material entfernt wurde, sodass angrenzend an das Faser-Bragg-Gitter (4) periodische Löcher (220) im Mantel (12) vorhanden sind, wobei der Mantel (12) in den verbleibenden Bereichen des ersten Längsabschnitts (21) vorhanden bleibt, und
**dass** die Löcher Cluster von Nanopartikeln enthalten.

10. Verfahren nach Anspruch 9, **dadurch gekennzeichnet, dass** weiterhin Antigene und/oder Viren nachgewiesen werden, indem zumindest eine Teilfläche der Oberfläche (210) des Kernes (11) im ersten Längsabschnitt (21) zusätzlich mit Antikörpern versehen ist.

11. Verfahren nach Anspruch 9 oder 10, **dadurch gekennzeichnet, dass** Laserlicht in den Kern (11) des Wellenleiters (10) eingekoppelt wird, dessen Wellenlänge in etwa der Braggwellenlänge des Faser-Bragg-Gitters (4) entspricht.

12. Verfahren nach einem der Ansprüche 9 bis 11, **dadurch gekennzeichnet, dass** zusätzlich die Wellenlänge des vom Faser-Bragg-Gitter (4) reflektierten Lichtes bestimmt wird.

13. Verfahren zur Herstellung einer Vorrichtung nach einem der Ansprüche 1 bis 8, wobei
zumindest ein Faser-Bragg-Gitter (4) im Kern (11) eines Wellenleiters (10) mit einem Kern (11) und einem den Kern (11) umgebenden Mantel (12) durch Punkt-zu-Punkt-Belichtung mit Laserstrahlung erzeugt und ein Teil des Mantels (12) des Wellenleiters (10), welcher im Strahlengang liegt, danach durch selektives nass- oder trockenchemisches Ätzen vom durch die Laserstrahlung belichteten Material entfernt wird, sodass angrenzend an das Faser-Bragg-Gitter (4) periodische Löcher (220) im Mantel entstehen, wobei der Mantel (12) in den verbleibenden Bereichen vorhanden bleibt, und in die Löcher (220) Cluster von Nanopartikeln (3) eingebracht werden.

14. Verfahren nach Anspruch 13, **dadurch gekennzeichnet, dass** zum Ätzen eine wässrige Lösung von Fluorwasserstoff verwendet wird.

15. Verfahren nach einem der Ansprüche 13 oder 14, **dadurch gekennzeichnet, dass** die Nanopartikel (3) durch ein Plasma aktiviert werden.

## Claims

1. Device for determining a refractive index or hydrophone, which contains at least one waveguide (10) having a core (11) and a cladding (12) surrounding the core (11), the cladding (12) being partly removed in at least one first longitudinal portion (21) and the core containing in at least one second longitudinal portion (22) at least one fiber Bragg grating (4), at least one partial area of the surface (210) being provided in the first longitudinal portion (21) with nanoparticles(3), and
the device further containing an apparatus for detecting the intensity of the light reflected by the fiber Bragg grating (4),
**characterized in** tha t
the fiberBragg grating (4) was produced by point-to-point exposure of the core (11) by means of laser radiation, part of the cladding (12), which is located in the beam path, having been removed from the material exposed by the laser radiation by means of selective wet or dry chemicaletching, so that periodic holes(220) are present in the cladding (12) adjacent to the fiber Bragg grating (4), the cladding (12) continuing to be present in the remaining regions of the first longitudinal portion (21) and
**in that** the holes (220) contain c lusters of nanoparticles (3).

2. Device or hydrophone according to claim 1, **characterized in that** the waveguide (10) is made as a single mode fiber.

3. Device or hydrophone according to any ofclaims 1 or2, **characterized in that** the nanoparticles(3) contain a metaloran alloy and have a plasm on frequency which corresponds approximately to a resonance frequency of the fiber Bragg grating (4).

4. Device or hydrophone according to any ofclaims 1 to 3,
characterize d in that the nano particles contain, or consist of, palladium.

5. Device or hydrophone according to any ofclaims 1 to 4,
characterized in thatat least one partial area of the surface provided with nano particles (3) in the first longitudinal portion additionally carries antibodies.

6. Device or hydro phone according to any ofclaims 1 to 5, further containing at least one laser light source, the emission wave length of which corresponds approximately to the Bragg wavelength of the fiber Bragg grating (4), and at least one photodiode which is configured to receive light reflected by the fiberBragg grating (4).

7. Device or hydrophone according to any ofclaims 1 to 6,
**characterized in** tha t the first longitudinal portion (21) has a length of about 0.1 mm to about 5.0 mm or **in that** the first longitudinal portion (21) has a length of about0.5 mm to about 2.0 mm.

8. Device or hydro phone according to any of claims 1 to 7, further containing an apparatus for detecting the wavelength of the light reflected by the fiber Bragg grating (4).

9. Method for determining a refractive index or a pressure change of a fluid, in which at least one waveguide (10) having a core (11) and a cladding (12) surrounding the core (11) is use d, the cladding (12) being at least partly removed in atleastone first longitudinal portion (21) and the core in atleastone second longitudinal portion (22) containing at least one fiber Bragg grating (4), light being coupled into the core of the waveguide (11) and the refractive indexand/or the pressure change being determined from the intensity of the reflected light.
**characterized in that**
the fiber Bragg grating (4) wasproduced by point-to-point exposure of the core (11) by means of laser radiation, part of the cladding (12), which islocated in the beam path, having been removed from the materialexposed by the laser radiation by means of selective wet or dry chemicaletching, so that periodic holes(220) are present in the cladding (12) adjacent to the fiber Bragg grating (4), the cladding (12) continuing to be present in the remaining regions of the first longitudinal portion (21) and
**in that** the holes (220) contain clusters of nanoparticles.

10. Method according to claim 9, **characterized in that** antigens and/or viruses are also identified by additionally providing at least one partial area of the surface (210) of the core (11) in the first longitudinal portion (21) with antibodies.

11. Method according to claim 9 or 10, **characterized in that** laser light is coupled into the core (11) of the waveguide (10), the wavelength of which approximately corresponds to the Bragg wavelength of the fiber Bragg grating (4).

12. Method according to any of claims9 to 11, **characterized in that** the wavelength of the light reflected by the fiber Bragg grating (4) is additionally determined.

13. Method for producing a device according to any ofclaims 1 to 8, wherein at least one fiber Bragg grating (4) in the core (11) ofa waveguide (10) having a core (11) and a cladding (12) surrounding the core (11) is produced by point-to-point exposure by means of laser radiation and part of the cladding (12) of the waveguide (10), which is located in the beam path, is subsequently removed from the material exposed by the laser radiation by means of selective wet or dry chemicaletching so that periodic holes (220) are formed in the cladding adjacent to the fiber Bragg grating (4), the cladding (12) continuing to be present in the remaining regions, and clusters of nanoparticles a re inserted into the holes (220).

14. Method according to claim 13, **characterized in that** an aqueous solution of hydrogen fluoride is used for etching.

15. Method according of any of claims 13 or 14, **characterized in that** the nanoparticles(3) are activated by a plasma.

## Revendications

1. Dispositif de détermination d'un indice de réfraction ou hydrophone, comprenant au moins un guide d'ondes (10) ayant un cœur (11) et une gaine (12) entourant le cœur (11),
dans lequel
la gaine (12) est enlevée partiellement dans au moins une première section longitudinale (21) et le cœur comprend au moins un réseau de Bragg à fibres (4) dans au moins une deuxième section longitudinale (22),
au moins une face partielle de la surface (210) dans la première section longitudinale (21) est pourvue de nanoparticules (3), et
le dispositif comprend en outre un moyen de détection de l'intensité de la lumière réfléchie par le réseau de Bragg à fibres (4),
**caractérisé en ce que**
le réseau de Bragg à fibres (4) a été créé en exposant le cœur (11) point par point au rayonnement laser,
une partie de la gaine (12) située dans le chemin optique a été enlevée du matériau, exposé au rayonnement laser, par attaque chimique sélective par voie humide ou sèche, de sorte que des trous périodiques (220) existent dans la gaine (12) au voisinage du réseau de Bragg à fibres (4), la gaine (12) restant présente dans les zones restantes de la première section longitudinale (21), et que les trous (220) contiennent des amas de nanoparticules (3).

2. Dispositif ou hydrophone selon la revendication 1,
**caractérisé en ce que** le guide d'ondes (10) est réalisé sous forme de fibre monomode.

3. Dispositif ou hydrophone selon l'une des revendications 1 ou 2,
**caractérisé en ce que** les nanoparticules (3) contiennent un métal ou un alliage et présentent une fréquence plasmonique qui correspond approximativement à une fréquence de résonance du réseau de Bragg à fibres (4).

4. Dispositif ou hydrophone selon l'une des revendications 1 à 3,
**caractérisé en ce que** les nanoparticules contiennent du palladium ou en sont constituées.

5. Dispositif ou hydrophone selon l'une des revendications 1 à 4,
**caractérisé en ce qu'**au moins une face partielle de la surface munie de nanoparticules (3) dans la première section longitudinale porte en supplément des anticorps.

6. Dispositif ou hydrophone selon l'une des revendications 1 à 5,
comprenant en outre au moins une source de lumière laser dont la longueur d'onde d'émission correspond approximativement à la longueur d'onde de Bragg du réseau de Bragg à fibres (4), et au moins une photodiode qui est conçue pour recevoir la lumière réfléchie par le réseau de Bragg à fibres (4).

7. Dispositif ou hydrophone selon l'une des revendications 1 à 6,
**caractérisé en ce que** la première section longitudinale (21) présente une longueur d'environ 0,1 mm à environ 5,0 mm, ou
**en ce que** la première section longitudinale (21) présente une longueur d'environ 0,5 mm à environ 2,0 mm.

8. Dispositif ou hydrophone selon l'une des revendications 1 à 7,
comprenant en outre un moyen de détection de la longueur d'onde de la lumière réfléchie par le réseau de Bragg à fibres (4).

9. Procédé de détermination d'un indice de réfraction ou d'une variation de la pression d'un fluide,
dans lequel on utilise au moins un guide d'ondes (10) ayant un cœur (11) et une gaine (12) entourant le cœur (11),
la gaine (12) est au moins partiellement enlevée dans au moins une première section longitudinale (21) et le cœur comprend au moins un réseau de Bragg à fibres (4) dans au moins une deuxième section longitudinale (22),
une lumière est injectée dans le cœur du guides d'ondes (11), et
l'indice de réfraction et/ou la variation de la pression est déterminée à partir de l'intensité de la lumière réfléchie,
**caractérisé en ce que**
le réseau de Bragg à fibres (4) a été créé en exposant le cœur (11) point par point à un rayonnement laser,
une partie de la gaine (12) située dans le chemin optique a été enlevée du matériau, exposé au rayonnement laser, par attaque chimique sélective par voie humide ou sèche, de sorte que des trous périodiques (220) existent dans la gaine (12) au voisinage du réseau de Bragg à fibres (4), la gaine restant présente dans les zones restantes de la première section longitudinale (21), et que les trous contiennent des amas de nanoparticules.

10. Procédé selon la revendication 9,
**caractérisé en ce que** des antigènes et/ou des virus sont en outre dépistés du fait qu'au moins une face partielle de la surface (210) du cœur (11) dans la première section longitudinale (21) est en supplément munie d'anticorps.

11. Procédé selon la revendication 9 ou 10,
**caractérisé en ce que** de la lumière laser est injectée dans le cœur (11) du guide d'ondes (10), dont la longueur d'onde correspond approximativement à la longueur d'onde de Bragg du réseau de Bragg à fibres (4).

12. Procédé selon l'une des revendications 9 à 11,
**caractérisé en ce que** l'on détermine en supplément la longueur d'onde de la lumière réfléchie par le réseau de Bragg à fibres (4).

13. Procédé de fabrication d'un dispositif selon l'une des revendications 1 à 8,
dans lequel au moins un réseau de Bragg à fibres (4) est créé par exposition point par point à un rayonnement laser dans le cœur (11) d'un guide d'ondes (10) ayant un cœur (11) et une gaine (12) entourant le cœur (11), et
une partie de la gaine (12) du guide d'ondes (10), située dans le chemin optique, est ensuite enlevée du matériau, exposé au rayonnement laser, par attaque chimique sélective par voie humide ou sèche, de sorte que des trous périodiques (220) se forment dans la gaine au voisinage du réseau de Bragg à fibres (4), la gaine (12) restant présente dans les zones restantes,
et
des amas de nanoparticules (3) sont introduits dans les trous périodiques (220).

14. Procédé selon la revendication 13,
**caractérisé en ce que** l'on utilise une solution aqueuse de fluorure d'hydrogène pour l'attaque chimique.

15. Procédé selon l'une des revendications 13 ou 14,
**caractérisé en ce que** les nanoparticules (3) sont activées par un plasma.
